# EUROPEAN PATENT APPLICATION

(11) **EP 3 361 286 A1**
(43) Date of publication of application: **15.08.2018**
(21) Application number: 15906972.3
(22) Date of filing: 29.10.2015
(51) Int. Cl.: G01S 19/41, H04W 84/08

(54) **POSITIONING METHOD, BASE STATION AND MOBILE TERMINAL IN MOBILE NETWORKS**

(71) Applicant: Huawei Technologies Co., Ltd., Longgang District Shenzhen, Guangdong 518129 (CN)
(72) Inventor: ZHANG, Yi, Shenzhen Guangdong 518129 (CN); LI, Hui, Shenzhen Guangdong 518129 (CN)
(74) Representative: Körber, Martin Hans
(86) International application number: PCT/CN2015/093274
(87) International publication number: WO 2017/070909

(57) **Abstract**

Embodiments of the present invention provide a positioning method in a mobile network, a base station, and a mobile terminal. The method, the base station, and the mobile terminal can be used for high-precision positioning of the mobile terminal. The positioning method includes: sending, by the first base station, first location information to a CORS system; receiving, by the first base station, first correction information that is sent by the CORS system and that is determined according to the first location information; and sending, by the first base station, the first correction information to the first mobile terminal, so that the first mobile terminal corrects, according to the first correction information, positioning information obtained from a positioning system by the first mobile terminal, to determine a location of the first mobile terminal. The base station includes: a sending module, configured to send first location information to a CORS system; and a receiving module, configured to receive first correction information sent by the CORS system. The sending module is further configured to send the first correction information to the first mobile terminal, so that the first mobile terminal determines a location of the first mobile terminal according to the first correction information.

## Description

### TECHNICAL FIELD

Embodiments of the present invention relate to the communications field, and more specifically, to a positioning method in a mobile network, a base station, and a mobile terminal.

### BACKGROUND

In a Long Term Evolution (Long Term Evolution, "LTE" for short) system, standard positioning manners mainly include: assisted global navigation satellite system (Assisted Global Navigation Satellite System, "A-GNSS" for short) positioning, observed time difference of arrival (Observed Time Difference of Arrival, "OTDOA" for short) positioning, and enhanced cell ID (enhanced Cell ID, "e-CID" for short) positioning. However, none of these three positioning manners can meet a requirement for high-precision positioning.

Currently, in a national surveying and mapping industry, a real-time kinematic (Real-time kinematic, "RTK" for short) technology is used to correct GNSS positioning information that uses a carrier phase technology, to obtain a positioning result with higher precision. However, a network RTK positioning technology needs to be implemented based on a continuously operating reference stations (Continuously Operation Reference Stations, "CORS" for short) system, but a current CORS system is applied only to a surveying and mapping field, has a limited broadcast capability, and cannot accommodate massive common users of a mobile network.

### SUMMARY

Embodiments of the present invention provide a positioning method in a mobile network, a base station, and a mobile terminal, so that high-precision positioning can be performed on the mobile terminal.

According to a first aspect, a positioning method in a mobile network is provided. The positioning method includes: sending, by a first base station, first location information to a continuously operating reference stations CORS system, where the first location information is used to indicate a location of the first base station; receiving, by the first base station, first correction information sent by the CORS system, where the first correction information is determined by the CORS system according to the first location information; and sending, by the first base station, the first correction information to a first mobile terminal, so that the first mobile terminal corrects, according to the first correction information, positioning information obtained from a positioning system by the first mobile terminal, to determine a location of the first mobile terminal.

With reference to the first aspect, in a first implementation of the first aspect, the first base station sends a cell broadcast message, where the cell broadcast message carries the first correction information, so that the first mobile terminal corrects, according to the first correction information, the positioning information obtained from the positioning system by the first mobile terminal, to determine the location of the first mobile terminal. In an embodiment, the cell broadcast message includes a first system information block SIB message.

With reference to the first aspect and the foregoing implementation of the first aspect, in a second implementation of the first aspect, the first correction information includes a single reference station differential correction, a Master-Auxiliary Concept MAC unit differential correction, or a virtual reference station VRS differential correction.

With reference to the first aspect and the foregoing implementations of the first aspect, in a third implementation of the first aspect, the positioning method further includes: sending, by the first base station, the first correction information to a second base station, so that the second base station determines second correction information according to the first correction information, and a second mobile terminal corrects, according to the second correction information sent by the second base station, positioning information obtained from the positioning system by the second mobile terminal, to determine a location of the second mobile terminal, where the second base station is not connected to the CORS system. In this embodiment of the present invention, the second base station receives the first correction information from the first base station, and determines the second correction information according to the first correction information, so that the second mobile terminal corrects, according to the second correction information, the positioning information obtained from the positioning system by the second mobile terminal, to determine the location of the second mobile terminal. Therefore, a requirement of massive mobile users for high-precision positioning is met, base stations that are directly connected to the CORS system are reduced, and working pressure of the CORS system is reduced.

With reference to the first aspect and the foregoing implementations of the first aspect, in a fourth implementation of the first aspect, the first base station sends the first correction information to the second base station by using N forwarding base stations, where N is determined according to a time to live value of the first correction information, and the forwarding base stations are not connected to the CORS system.

According to a second aspect, a positioning method in a mobile network is provided. The positioning method includes: receiving, by a second base station, first correction information sent by a first base station, where the first correction information is determined by a continuously operating reference stations system according to a real-time kinematic observation value; determining, by the second base station, second correction information according to the first correction information; and sending, by the second base station, the second correction information to the second mobile terminal, so that the second mobile terminal corrects, according to the correction information, positioning information obtained from the positioning system by the second mobile terminal, to determine a location of the second mobile terminal. The second base station receives the first correction information from the first base station, and determines the second correction information according to the first correction information, so that the second mobile terminal corrects, according to the second correction information, the positioning information obtained from the positioning system by the second mobile terminal, to determine high-precision positioning information of the mobile terminal. Therefore, a requirement of massive mobile users for high-precision positioning is met, base stations that are directly connected to the CORS system are reduced, and working pressure of the CORS system is reduced.

With reference to the second aspect, in a first implementation of the second aspect, the second base station receives the first correction information that is sent by the first base station by using N forwarding base stations, where N is determined according to a time to live value of the first correction information, and the forwarding base stations are not connected to the CORS system.

With reference to the second aspect and the foregoing implementation of the second aspect, in a second implementation of the second aspect, if a distance between the second base station and the first base station falls within a preset range, the second correction information is the first correction information, and the first correction information includes a signal reference station differential correction or a virtual reference station VRS differential correction.

With reference to the second aspect and the foregoing implementations of the second aspect, in a third implementation of the second aspect, if a distance between the second base station and the first base station falls within a preset range, the second correction information is the first correction information, and the first correction information includes a MAC unit differential correction. The second base station receives a MAC unit differential correction sent by a target first base station in a target MAC unit, and the second base station and the target first base station belong to the target MAC unit. The second base station sends the MAC unit differential correction to the second mobile terminal, so that the second mobile terminal determines the location of the second mobile terminal according to the MAC unit differential correction.

With reference to the second aspect and the foregoing implementations of the second aspect, in a fourth implementation of the second aspect, if a distance between the second base station and the first base station is beyond a preset range, the second correction information includes a virtual reference station VRS differential correction. The second base station receives at least three pieces of first correction information sent by at least three first base stations, and each of the at least three first base stations is in one-to-one correspondence with each of the at least three pieces of first correction information. The second base station determines the VRS differential correction according to the at least three pieces of first correction information. The second base station sends the VRS differential correction to the second mobile terminal, so that the second mobile terminal determines the location of the second mobile terminal according to the VRS differential correction.

With reference to the second aspect and the foregoing implementations of the second aspect, in a fifth implementation of the second aspect, the second base station sends a cell broadcast message, and the cell broadcast message carries the second correction information, so that the second mobile terminal receives the second correction information. In an embodiment, the cell broadcast message includes a second system information block SIB message.

According to a third aspect, a positioning method in a mobile network is provided. The positioning method includes: obtaining, by a mobile terminal, positioning information for the mobile terminal from a positioning system; receiving, by the mobile terminal, correction information sent by a base station, where the correction information is determined by a continuously operating reference stations system according to a real-time kinematic observation value; and correcting, by the mobile terminal, the positioning information according to the correction information, to determine a location of the mobile terminal.

According to a fourth aspect, a base station is provided. The base station includes a sending module and a receiving module. The sending module and the receiving module are configured to perform the method in the first aspect.

According to a fifth aspect, a base station is provided. The base station includes a receiving module, a determining module, and a sending module. The receiving module, the determining module, and the sending module are configured to perform the method in the second aspect.

According to a sixth aspect, a mobile terminal is provided. The mobile terminal includes an obtaining module, a receiving module, and a determining module. The obtaining module, the receiving module, and the determining module are configured to perform the method in the third aspect.

According to a seventh aspect, a base station is provided. The base station includes a receiver, a transmitter, a memory, a processor, and a bus system. The receiver, the transmitter, the processor, and the memory are connected to each other by using the bus system. The memory is configured to store an instruction. The processor is configured to execute the instruction stored in the memory, so as to control the receiver to receive a signal and control the transmitter to send a signal. The processor, the receiver, and the transmitter are specifically configured to perform the method in the first aspect.

According to an eighth aspect, a base station is provided. The base station includes a receiver, a transmitter, a memory, a processor, and a bus system. The receiver, the transmitter, the processor, and the memory are connected to each other by using the bus system. The memory is configured to store an instruction. The processor is configured to execute the instruction stored in the memory, so as to control the receiver to receive a signal and control the transmitter to send a signal. The processor, the receiver, and the transmitter are specifically configured to perform the method in the second aspect.

According to a ninth aspect, a mobile terminal is provided. The mobile terminal includes a receiver, a transmitter, a memory, a processor, and a bus system. The receiver, the transmitter, the processor, and the memory are connected to each other by using the bus system. The memory is configured to store an instruction. The processor is configured to execute the instruction stored in the memory, so as to control the receiver to receive a signal and control the transmitter to send a signal. The processor, the receiver, and the transmitter are specifically configured to perform the method in the third aspect.

According to the positioning method in a mobile network, the base station, and the mobile terminal in the embodiments of the present invention, a base station may be connected to a CORS system, to obtain correction information; and the correction information is sent to a mobile terminal, so that the mobile terminal corrects, according to the correction information, positioning information obtained from a positioning system by the mobile terminal, to determine high-precision positioning information of the mobile terminal. Therefore, a requirement of massive mobile users for high-precision positioning is met.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1(a) and FIG. 1(b) are schematic diagrams of architectures of a system applicable to a positioning method in a mobile network according to an embodiment of the present invention;
FIG. 2 is a schematic flowchart of a positioning method in a mobile network according to an embodiment of the present invention;
FIG. 3 is another schematic flowchart of a positioning method in a mobile network according to an embodiment of the present invention;
FIG. 4 is still another schematic flowchart of a positioning method in a mobile network according to an embodiment of the present invention;
FIG. 5 is a schematic diagram of a positioning method in a mobile network according to an embodiment of the present invention;
FIG. 6 is another schematic diagram of a positioning method in a mobile network according to an embodiment of the present invention;
FIG. 7 is a schematic flowchart of a positioning method in a mobile network according to another embodiment of the present invention;
FIG. 8 is another schematic flowchart of a positioning method in a mobile network according to another embodiment of the present invention;
FIG. 9 is a schematic flowchart of a positioning method in a mobile network according to still another embodiment of the present invention;
FIG. 10 is a schematic block diagram of a base station according to an embodiment of the present invention;
FIG. 11 is a schematic block diagram of another base station according to an embodiment of the present invention;
FIG. 12 is a schematic block diagram of a mobile terminal according to an embodiment of the present invention;
FIG. 13 is a schematic block diagram of a base station according to another embodiment of the present invention;
FIG. 14 is a schematic block diagram of another base station according to another embodiment of the present invention; and
FIG. 15 is a schematic block diagram of a mobile terminal according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as a Global System for Mobile Communications (Global System of Mobile communication, "GSM" for short), a Code Division Multiple Access (Code Division Multiple Access, "CDMA" for short) system, a Wideband Code Division Multiple Access (Wideband Code Division Multiple Access Wireless, "WCDMA" for short) system, a general packet radio service (General Packet Radio Service, "GPRS" for short) system, and a Long Term Evolution (Long Term Evolution, "LTE" for short) system.

User equipment (User Equipment, "UE" for short), also referred to as a mobile terminal (Mobile Terminal), a mobile user equipment, and the like, may communicate with one or more core networks through a radio access network (Radio Access Network, "RAN" for short). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus, which exchanges language and/or data with the radio access network.

A base station may be a base transceiver station (Base Transceiver Station, "BTS" for short) in GSM or CDMA, or may be a nodeB (NodeB) in WCDMA, or may be an evolved NodeB (evolutional Node B, "eNB" or "e-NodeB" for short) in LTE. This is not limited in the present invention.

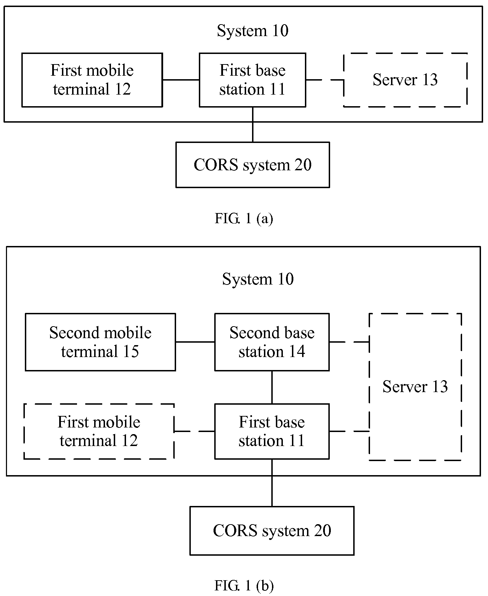

FIG. 1 is a schematic diagram of an architecture of a system 10 applicable to a positioning method in a mobile network according to an embodiment of the present invention. As shown in FIG. 1 (a), the system 10 may include at least one base station 11 (for ease of description, referred to as a "first base station" for short below, where "first" is for differentiation and identification) connected to a CORS system 20, and a mobile terminal 12 (that is, a first mobile terminal) that supports a GNSS observation technology and that is within a serving cell (or a radio network coverage area) of the first base station 11. Optionally, the system 10 may further include at least one server 13. The first base station 11 may be connected to the server 13. As shown in FIG. 1(b), the system 10 may further include at least one first base station 11, at least one base station (for ease of description, referred to as a "second base station" for short below, where "second" is for differentiation and identification) 14 that is not connected to the CORS system 20, and a mobile terminal 15 (that is, a second mobile terminal) that supports the GNSS observation technology and that is within a serving cell of the second base station 14. Optionally, the system 10 may further include at least one server 13. Both the first base station 11 and the second base station 14 may be connected to the server 13. Optionally, the system 10 may further include the first mobile terminal 12. In this embodiment of the present invention, the system 10 is connected to the CORS system 20 by using the first base station 11. Specifically, the first base station 11 may be connected to a CORS central station in the CORS system 20, so as to obtain correction information or an RTK observation value from the CORS system 20.

It should be understood that a GNSS satellite is merely described as an example, and all satellites used for observing a location of an RTK reference source in real time or other positioning devices fall within the protection scope of the present invention.

In this embodiment of the present invention, the first mobile terminal and the second mobile terminal may be mobile terminals that support a GNSS carrier phase observation technology. It should be understood that, as one of GNSS observation technologies, the GNSS carrier phase observation technology is described as an example in this embodiment. All mobile terminals that support the GNSS observation technology may correct, by using correction information obtained by resolving an RTK observation value, positioning information obtained from a GNSS positioning system by the mobile terminal. It should be further understood that the GNSS positioning system is merely described as an example, and shall not constitute a limitation on the present invention. The present invention is not limited thereto. Another positioning system applied to the mobile network falls within the protection scope of the present invention.

The foregoing system 10 applicable to a positioning method in a mobile network according to an embodiment of the present invention and the foregoing CORS system may be collectively referred to as an enhanced-network RTK (Enhanced-Network RTK, "E-NRTK" for short) positioning system.

It should be noted that the RTK positioning technology is a real-time kinematic positioning technology based on a carrier phase observation value. In the RTK positioning technology, a GNSS reference station (or a reference station) needs to be constructed, GNSS satellite data needs to be continuously observed, and an observation result needs to be delivered to a mobile station (that is, a mobile terminal). The mobile station resolves a precise location of the mobile station according to data of the reference station and a GNSS observation result of the mobile station. Precision may reach a centimeter level. Multiple GNSS reference stations that support RTK are connected to form a network by using a network technology and summarized to a positioning system (for example, the CORS system), and the positioning system serves the mobile station. This is a network RTK technology.

It should be understood that the CORS system is merely described as an example, and all positioning systems based on the network RTK technology fall within the protection scope of the present invention.

For ease of understanding and description, the positioning method in a mobile network in the embodiments of the present invention is described in detail below by using the E-NRTK positioning system as an example. It should be understood that, as a positioning system, the E-NRTK positioning system is merely described as an example, and shall not constitute any limitation on the present invention. Any method in which the network RTK positioning technology is applied to the mobile network falls within the protection scope of the present invention.

It should be noted that schematic diagrams of architectures of the foregoing system 10 applicable to a positioning method in a mobile network according to an embodiment of the present invention are merely described as examples, and the present invention is not limited thereto. For example, the system may further include more first base stations 11, second base stations 14, or the like.

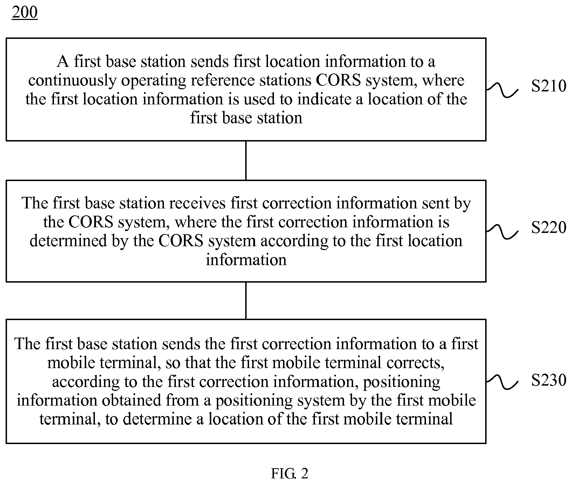

With reference to FIG. 2 to FIG. 5, the positioning method in a mobile network according to the embodiments of the present invention is described in detail below.

FIG. 2 is a schematic flowchart of a positioning method 200 in a mobile network according to an embodiment of the present invention that is described from a perspective of a first base station. As shown in FIG. 2, the positioning method 200 includes the following steps.

S210. The first base station sends first location information to a continuously operating reference stations CORS system, where the first location information is used to indicate a location of the first base station.

S220. The first base station receives first correction information sent by the CORS system, where the first correction information is determined by the CORS system according to the first location information.

S230. The first base station sends the first correction information to a first mobile terminal, so that the first mobile terminal corrects, according to the first correction information, positioning information obtained from a positioning system by the first mobile terminal, to determine a location of the first mobile terminal.

In this embodiment of the present invention, as an example instead of a limitation, the CORS system may be the CORS system 20 in FIG. 1(a), the first base station may be the first base station 11 in FIG. 1(a), and the first mobile terminal may be the first mobile terminal 12 in FIG. 1(a).

Specifically, the first base station obtains the first correction information from the CORS system (for example, a CORS central station in the CORS system), and forwards the first correction information to the first mobile terminal, so that the first mobile terminal may correct, according to the first correction information, the positioning information obtained from the positioning system (for example, a GNSS positioning system) by the first mobile terminal, to determine a current location.

In S210, the first base station sends the first location information to the CORS system. The first location information is used to indicate the location of the first base station. The first location information may be location coordinates planned during installation of the first base station. Alternatively, the first base station may be a base station that uses the GNSS, and the first location information may be positioning information received from the GNSS by the first base station.

In S220, the first base station receives the first correction information sent by the CORS system. The first correction information may be determined by the CORS system according to the location of the first base station. The first base station is connected to the CORS central station in the CORS system, to obtain the first correction information from the CORS central station in the CORS system.

As an example instead of a limitation, the first location information, the first correction information, or an RTK observation value may be carried in a Networked Transport of Radio Technical Commission for Maritime services (Radio Technical Commission for Maritime services, "RTCM" for short) via Internet Protocol (Networked Transport of RTCM via Internet Protocol, "Ntrip" for short) message. That is, the Ntrip message may be a carrier for transmitting information between the base station and the CORS system. It should be understood that the Ntrip message is merely described as an example. Alternatively, the CORS system may send the first correction information to the first base station by using a message of another protocol or in another broadcast form. This is not particularly limited in the present invention.

In this embodiment of the present invention, when receiving the Ntrip message, the first base station may parse the Ntrip message, to obtain correction information (for example, the first correction information) or an RTK observation value from the Ntrip message. For example, the first correction information may be a virtual reference station (Virtual Reference Station, "VRS" for short) differential correction in an RTCM 2.X format or an RTCM 3.0 format, or may be a Master-Auxiliary Concept (Master-Auxiliary Concept, "MAC" for short) differential correction in an RTCM 3.X format. It should be understood that the foregoing types and formats of the correction information are merely described as examples, and shall not constitute any limitation on the present invention. The present invention is not limited thereto. For example, the correction information may further include a Flächen-Korrektur-Parameter (Flächen-Korrektur-Parameter, "FKP" for short), a signal reference station correction, or the like. Alternatively, the format of the correction information may include a Compact Measurement Record (Compact Measurement Record, "CMR" for short) format, a CMR+ format, or the like. This is not particularly limited in the present invention.

It should be noted that the first base station may conduct a corresponding positioning service in the CORS system. The CORS system allocates a unique user name and password to the first base station. After logging in to the CORS system by using the user name and the password (that is, the first base station is verified by the CORS system), the first base station may obtain correction information within a serving range of the CORS system.

In S230, the first base station sends the first correction information to the first mobile terminal. A distance between the first mobile terminal and the first base station falls within a preset range, or the mobile terminal is in a preset range of the base station. The first correction information is used for correcting GNSS positioning information of the first mobile terminal. The preset range may be an effective range covered by the first correction information. The effective range of the first correction information is far greater than a radio network coverage area of the base station. That is, within the preset range, a positioning result obtained by performing correction by using the first correction information may still keep relatively high precision. Alternatively, within the effective range, impact exerted on a positioning result by the distance between the first mobile terminal and the first base station is merely at a decimeter level. In other words, the first correction information may be used for correcting the GNSS positioning information of the first mobile terminal that is in a radio network coverage area of the first base station.

As an example instead of a limitation, the first base station may send the first correction information to a mobile terminal (including the first mobile terminal) within a serving cell of the first base station in a form of a cell broadcast message. For example, the first base station may add the first correction information to a system information block (System Information Block, "SIB" for short) message.

After receiving the first correction information, the first mobile terminal needs to analyze the first correction information. As an example instead of a limitation, the first mobile terminal may determine a type of the first correction information according to indication information, for example, a specific field, carried in a message header in the message that carries the first correction information. If the first correction information is a VRS differential correction, the first mobile terminal may directly correct the positioning information from the GNSS by using the VRS differential correction. If the first correction information is a MAC unit differential correction, and the MAC unit differential correction includes all observation values of a master station and differential corrections of an auxiliary station, the first mobile terminal may perform self-resolving on the MAC unit differential correction, to obtain a differential correction used for positioning. It should be understood that a method for calculating and processing the correction information by the mobile terminal is similar to a processing method of a mobile station in the prior art. This is not particularly limited in the present invention.

It should be understood that the cell broadcast message is merely described as an example, and shall not constitute any limitation on the present invention. The present invention is not limited thereto. The first base station may send the first correction information to the first mobile terminal in a form of another message. This is not particularly limited in the present invention.

According to the positioning method in this embodiment of the present invention, a base station may be connected to a CORS system, to obtain correction information; and the correction information is sent to a mobile terminal, so that the mobile terminal corrects positioning information from the GNSS according to the correction information, to determine high-precision positioning information of the mobile terminal. Therefore, a requirement of massive mobile users for high-precision positioning is met.

With development of network technologies and intelligent mobile terminals, a mobile location service (Location Based Service, "LBS" for short) plays an increasingly important role, plays an irreplaceable role in fields such as rescue, navigation, social contact, and shopping, and provides a technical base for scenarios such as self-driving, automatic shopping, and accurate person finding.

However, an existing mobile positioning manner such as the GNSS, the OTDOA, or the e-CID cannot provide high-precision positioning within three meters. In GPS positioning mainly used for a mobile terminal, precision still exceeds three meters, and relatively long time is consumed for positioning.

A GNSS satellite, a reference station, and a mobile station are disposed in a conventional CORS system. An RTK technology is that a GNSS positioning system based on a carrier phase technology continuously observes GNSS satellite data of a reference station, and delivers an observation result (that is, correction information) to a mobile station (for example, a mobile terminal), and the mobile station may obtain, by means of resolving, a high-precision location of the mobile station with reference to correction information for the reference station and a GNSS observation value of the mobile station. Precision of the RTK technology may reach a centimeter level. In a network RTK technology, with help of a modern network technology, multiple GNSS reference stations that support RTK are connected to form a network and summarized to a CORS system, and the CORS system serves the mobile station. In a conventional network RTK positioning system, a mobile station in a CORS system needs to belong to a same administrative region as the CORS system, for example, a same province. CORS system stations between provinces cannot be interconnected or interworked. A mobile station corresponding to a CORS system in a province A cannot receive broadcast from a CORS system in a province B. That is, smooth handover cannot be implemented if a mobile station moves.

Correspondingly, in this embodiment of the present invention, the network RTK technology is applied to a mobile network, to form an E-NRTK positioning system. In the E-NRTK positioning system, a base station obtains correction information from a CORS system, and sends the correction information to a mobile terminal, so that the mobile terminal corrects positioning information from the GNSS according to the correction information, to determine high-precision positioning information of the mobile terminal, so that the mobile terminal can implement meter-level, decimeter-level, or centimeter-level high-precision positioning. Therefore, a requirement of massive mobile users for high-precision positioning is met. Further, in this embodiment of the present invention, a base station obtains correction information broadcast by a CORS system, and a base station at each place sends the correction information to a mobile terminal, so that mobile terminals in different areas can be smoothly handed over to serving cells of base stations at current locations when the mobile terminals move.

All satellite positioning systems that support a GNSS observation technology are applicable to the technical solutions in the present invention. All methods in which the technical solutions in the present invention is used and in which an RTK observation value is obtained by using an RTK reference source in a base station, and then correction information of GNSS positioning information is sent to a mobile terminal in a broadcast form shall fall within the protection scope of the present invention.

Optionally, that the first base station sends the first correction information to a first mobile terminal, so that the first mobile terminal corrects, according to the first correction information, positioning information obtained from a positioning system by the first mobile terminal, to determine a location of the first mobile terminal includes:
sending, by the first base station, a cell broadcast message, where the cell broadcast message carries the first correction information, so that the first mobile terminal corrects, according to the first correction information, the positioning information obtained from the positioning system by the first mobile terminal, to determine the location of the first mobile terminal.

Specifically, the first base station may send the first correction information to the mobile terminal (including the first mobile terminal) within the serving cell of the first base station in a form of the cell broadcast message.

Optionally, the cell broadcast message includes a first system information block SIB message.

For example, the first SIB message may be carried in a radio resource control (Radio Resource Control, "RRC" for short) message.

It should be understood that the cell broadcast message, the SIB message, and the RRC message are merely described as examples, and shall not constitute any limitation on the present invention. The present invention is not limited thereto. The first base station may send the first correction information to the first mobile terminal in a form of another message. This is not particularly limited in the present invention.

Optionally, the first correction information includes a signal reference station differential correction, a Master-Auxiliary Concept MAC unit differential correction, or a virtual reference station VRS differential correction.

Specifically, the CORS system determines the location of the first base station according to the received first location information. When the first base station is exactly at a location of a reference station (or a reference station) in the CORS system, the first base station may directly use correction information of the reference station. Therefore, the first correction information may be single reference station correction information. When the first base station is not at a location of a reference station, the CORS system may calculate an RTK observation value of a reference station near the first base station according to the location of the first base station, to determine correction information for the first base station, that is, the first correction information.

In this embodiment of the present invention, because different CORS systems support different algorithms, different first correction information is obtained by means of calculation. When the CORS system supports a MAC technology, the CORS system first calculates, according to the location of the first base station, a MAC unit to which the first base station belongs, selects a corresponding MAC unit differential correction according to the MAC unit, and sends the selected MAC unit differential correction to the first base station. When the CORS system supports a VRS method, the CORS system may select, according to the location of the first base station, at least three reference stations that are the closest to the first base station, and use RTK observation values of the at least three reference stations for VRS resolving, to obtain a VRS differential correction for the first base station.

It should be understood that, as a method for resolving network RTK positioning information, the MAC technology and the VRS method are merely described as examples. This is not particularly limited in the present invention.

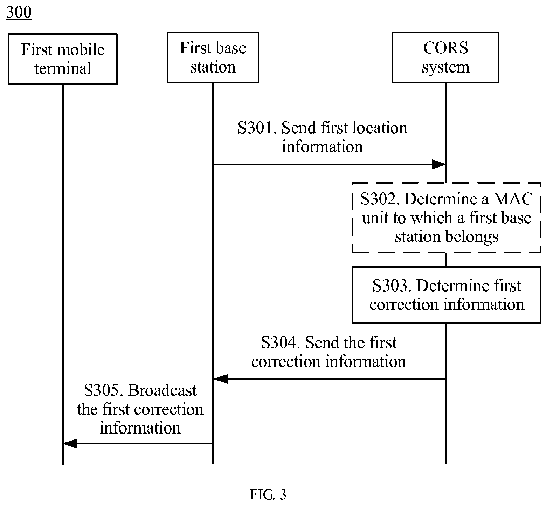

For ease of understanding, with reference to FIG. 3, a positioning method 300 in a mobile network in an embodiment of the present invention is described in detail below by using an example in which the first base station obtains the first correction information, and forwards the first correction information to the first mobile terminal.

As shown in FIG. 3, the positioning method 300 includes the following steps.

S301. A first base station sends first location information to the CORS system, where the first location information may be carried in an Ntrip message.

S302. If the CORS system supports a MAC technology, the CORS system first determines, according to a location of the first base station, a MAC unit to which the first base station belongs, and if the CORS system does not support a MAC technology, S303 may be directly performed.

S303. The CORS system determines first correction information (including a MAC unit differential correction or a VRS differential correction) for the first base station according to a location of the first base station. A specific procedure of S303 is described in detail in the foregoing method. For brevity, details are not described herein.

S304. The CORS system sends the first correction information to the first base station, where the first correction information may be carried in an Ntrip message.

S305. After receiving the first correction information, the first base station broadcasts the first correction information, so that a mobile terminal located in a serving range of the first base station receives the first correction information.

It should be noted that the first base station may continuously listen to the first correction information sent by the CORS system, and broadcast the first correction information in specific frequency (for example, once per second), to ensure real-time update of the second correction information.

Optionally, the positioning method 200 further includes:
receiving, by the first base station, a first positioning certificate sent by the server, where the first positioning certificate is corresponding to a second positioning certificate sent by the server to the first mobile terminal, so that the first mobile terminal obtains the first correction information from the first base station according to the second positioning certificate.

Specifically, when the first mobile terminal needs to perform high-precision positioning, the first mobile terminal first needs to send a positioning request to the server. The server may send the first positioning certificate to the first base station according to the positioning request, and send the second positioning certificate to the first mobile terminal. The first positioning certificate is corresponding to the second positioning certificate. The first mobile terminal obtains the first correction information from the first base station according to the second positioning certificate.

It should be noted that, as a function module used for positioning, the server may be a gateway mobile location center (Gateway Mobile Location Center, "GMLC" for short), an evolved serving mobile location center (Evolved Serving Mobile Location Center, "E-SMLC" for short), or the like. Alternatively, another network element may be used for performing resolving processing on the RTK observation value and uniformly managing the correction information. This is not particularly limited in the present invention. In addition, the server may be disposed in a core network, or may be disposed in a base station. This is not particularly limited in the present invention.

Optionally, the receiving, by the first base station, a first positioning certificate sent by the server includes:
receiving, by the first base station, a first Long Term Evolution Positioning Protocol A (LTE Positioning Protocol A, "LPPa" for short) message sent by the server, where the first LPPa message carries the first positioning certificate.

It should be noted that the positioning request may be sent to the server by the first mobile terminal, or may be sent to the server by another positioning service terminal, to request to perform high-precision positioning on a specific mobile terminal. For example, a rescue center sends a positioning request, to request high-precision positioning performed on casualties at a place of a disaster, or a related public security department sends a positioning request, to request to high-precision positioning performed on missing children. This is not specifically limited in the present invention.

Optionally, the server may send the first positioning certificate to the first base station in advance, and send the second positioning certificate to the first mobile terminal that permanently camps on the serving cell of the first base station, so that the first mobile terminal performs high-precision positioning at any time, and time for requesting positioning is reduced. Alternatively, the server may periodically send an updated first positioning certificate and second positioning certificate to the first base station and the first mobile terminal, to prevent intrusion of malware.

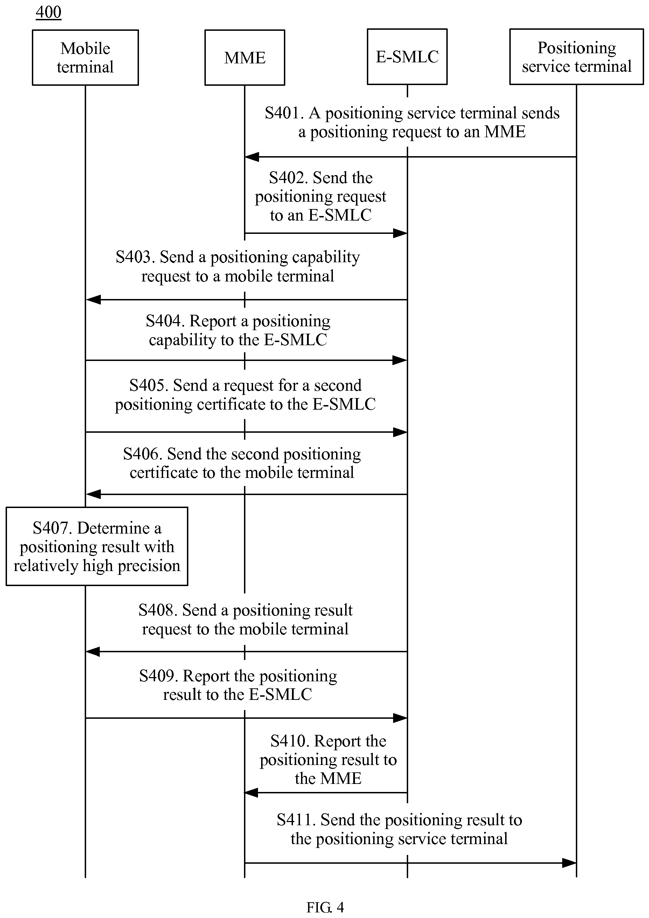

For ease of understanding, with reference to FIG. 4, a positioning method 400 in a mobile network in an embodiment of the present invention is described below in detail by using an example in which an E-SMLC is used as a server and a positioning service terminal requests to position a first mobile terminal.

As an example instead of a limitation, the E-SMLC may be a network element in a core network. As an important network element in the core network, a mobility management entity (Mobility Management Entity, "MME" for short) may be a gateway of the server. When high-precision positioning needs to be performed on the first mobile terminal, a positioning request may first be sent to the MME to apply for positioning permission, and after being authenticated by the MME, the positioning request is forwarded to the server.

It should be understood that the MME used as the gateway of the server is merely described as an example, and shall not constitute any limitation on the present invention. The present invention is not limited thereto. When the server is in a base station or another network entity, the server may directly interact with the positioning service terminal, or another network element is used as the gateway of the server.

In this embodiment of the present invention, after receiving a request for positioning the first mobile terminal, the server may first request a positioning capability from the first mobile terminal, to determine whether the first mobile terminal normally receives a GNSS signal, whether the first mobile terminal supports GNSS carrier phase observation, whether the first mobile terminal has high-precision positioning permission, and whether the first mobile terminal enables a function such as positioning/location reporting. When the first mobile terminal meets the foregoing conditions, the second positioning certificate is delivered to the first mobile terminal, so that the first mobile terminal obtains, according to the second positioning certificate, the first correction information sent by the first base station.

As shown in FIG. 4, the positioning method 400 includes the following steps.

S401. A positioning service terminal sends a positioning request to an MME, to request to perform high-precision positioning on a first mobile terminal.

S402. The MME authenticates the positioning request, and after the positioning request is authenticated by the MME, the MME forwards the positioning request to an E-SMLC for processing.

S403. The E-SMLC sends, according to the positioning request, a positioning capability request to the first mobile terminal that requests to be positioned, and S404 is performed if the first mobile terminal meets the following conditions: (a) A GNSS signal is normal; (b) GNSS carrier phase observation is supported; (c) A subscriber identity module (Subscriber Identity Module, "SIM" for short) card has high-precision positioning permission; and (d) A positioning/location reporting function is enabled.

S404. The first mobile terminal reports a positioning capability to the E-SMLC, and notifies the E-SMLC that the first mobile terminal meets the positioning conditions.

S405. The first mobile terminal sends a request for a second positioning certificate to the E-SMLC.

S406. The E-SMLC sends the second positioning certificate to the first mobile terminal according to the positioning capability reported by the first mobile terminal, so that the positioning service terminal can perform high-precision positioning on the first mobile terminal.

S407. The first mobile terminal corrects GNSS positioning information according to first correction information from the first base station, to determine a relatively high-precision positioning result. Before S407, a process of obtaining the first correction information and sending the first correction information to the first mobile terminal by the first base station is similar to the process in the method 200. For brevity, details are not described herein.

S408. The E-SMLC sends a positioning result request to the first mobile terminal.

S409. After receiving the positioning result request, the first mobile terminal reports the positioning result to the E-SMLC.

S410. After receiving the positioning result, the E-SMLC reports the positioning result to the MME.

S411. The MME sends the positioning result to the positioning service terminal, so that the request of the positioning service terminal for performing high-precision positioning on the first mobile terminal is completed.

Particularly, if the first mobile terminal has not enabled the positioning/location reporting function, the E-SMLC may trigger, according to the positioning request of the positioning service terminal, the first mobile terminal to download the second positioning certificate, so as to enable the positioning/location reporting function.

It should be understood that sequence numbers of the foregoing processes do not mean execution sequences. The execution sequences of the processes should be determined according to functions and internal logic of the processes, and should not constitute any limitation on an implementation process of this embodiment of the present invention. For example, in this embodiment of the present invention, S405 and S406 may be performed before S401, or may be performed at any time between S401 and S404.

It should be noted that in S403, S404, S405, S407, S408, and S409 in the foregoing method 400, information interacted between the first mobile terminal and the E-SMLC in may be carried by using a Long Term Evolution Positioning Protocol (LTE Positioning Protocol, "LLP" for short) message. LPP is a protocol, in LTE, used for communication between user equipment and a positioning service center.

It should be further noted that the foregoing MME, E-SMLC, and positioning service terminal are merely described as examples, and shall not constitute any limitation on the present invention. The present invention is not limited thereto.

It should be further noted that a method for requesting, by the positioning service terminal, to position a second mobile terminal is similar to the specific process of the positioning method 400. For brevity, details are not described herein.

According to the positioning method in this embodiment of the present invention, a base station is connected to a CORS system, to obtain correction information; and the correction information is sent to a mobile terminal, so that the mobile terminal corrects, according to the correction information, positioning information obtained from a positioning system by the mobile terminal, to determine high-precision positioning information of the mobile terminal. Therefore, a requirement of massive mobile users for high-precision positioning is met.

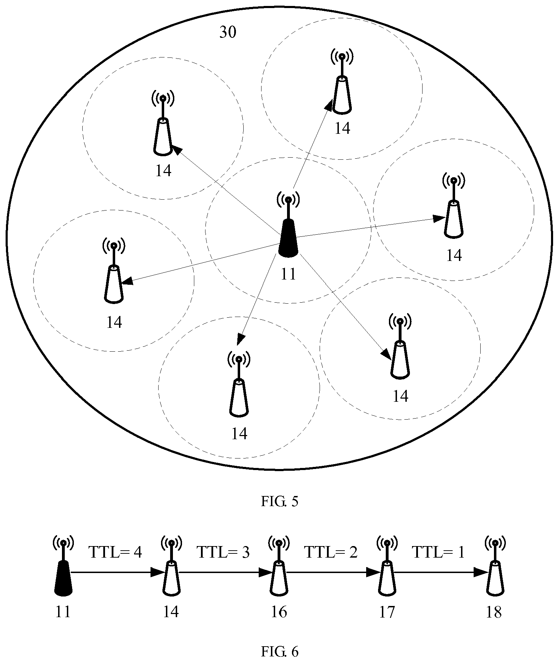

With reference to FIG. 2 to FIG. 4, the method, in the embodiments of the present invention, in which the first base station obtains the first correction information, and forwards the first correction information to the first mobile terminal is described above in detail. With reference to FIG. 5 and FIG. 6, a method in which the first base station sends the first correction information to a second base station (or a second base station obtains the first correction information from the first base station) is described below in detail.

Optionally, the positioning method 200 further includes:
sending, by the first base station, the first correction information to a second base station, so that the second base station determines second correction information according to the first correction information, and a second mobile terminal corrects, according to the second correction information sent by the second base station, positioning information obtained from the positioning system by the second mobile terminal, to determine a location of the second mobile terminal, where the second base station is not connected to the CORS system.

In this embodiment of the present invention, because a coverage area of an RTK reference source is far greater than a range of a serving cell of the base station, that is, there may be multiple base stations in a coverage area of an RTK reference source. If each base station is connected to the CORS system, directly obtaining the first correction information from the CORS system greatly increases working pressure of the CORS system and exceeds a capacity of the CORS system. Therefore, the first base station may be configured according to a specific proportion (for example, manual configuration), and a remaining base station is the second base station. The second base station is not directly connected to the CORS system, but is connected to the first base station by using an X2 interface, to obtain the first correction information from the first base station.

Specifically, as shown in FIG. 5, within a coverage area 30 (shown by solid lines in the figure) of an RTK reference source, a solid base station represents a first base station 11, and a hollow base station represents a second base station 14. Each base station is corresponding to a serving cell (shown by dashed lines in the figure). For example, the first base station 11 is corresponding to a first mobile terminal, and the second base station 14 is corresponding to a second mobile terminal.

In this embodiment of the present invention, the second base station 14 may directly obtain first correction information from the first base station 11. When the second base station 14 and the first base station 11 belong to a coverage area 30 of a same RTK reference source, the second base station 14 may directly forward, to the second mobile terminal, the first correction information sent by the first base station 11, so that the second mobile terminal corrects positioning information from the GNSS according to the first correction information, to determine a current location.

Optionally, the sending, by the first base station, the first correction information to a second base station includes:
sending, by the first base station, the first correction information to the second base station by using N forwarding base stations, where N is determined according to a time to live value of the first correction information, and the forwarding base stations are not connected to the CORS system.

Specifically, when there is no first base station near a second base station, the second base station may obtain, from a second base station near the second base station by using an X2 interface, first correction information sent by a first base station.

A time to live (Time to Live, "TTL" for short) value may be assigned to the first correction information, so as to determine a quantity of times that the first correction information can be forwarded. As shown in FIG. 6, the TTL assigned to the first correction information is 4. When the first correction information is sent to the second base station 14 by the first base station 11, a "TTL-1" operation is performed on the TTL value, that is, the TTL is 3. When the first correction information is forwarded to a second base station 15 by the second base station 14, a "TTL-1" operation is performed on the TTL value, that is, the TTL is 2. By analogy, when the first correction information is forwarded to a second base station 18 by a second base station 17, the TTL is 0, and in this case, the RTK observation value is not forwarded any longer.

It should be noted that the foregoing method for sending the first correction information to the second base station by the first base station is merely described as an example, and shall not constitute any limitation on the present invention. The present invention is not limited thereto.

According to the positioning method in this embodiment of the present invention, a first base station is connected to a CORS system, to obtain first correction information; and the first correction information is sent to a second base station, so that the second base station determines second correction information according to the first correction information, and the second mobile terminal corrects, according to the second correction information, positioning information obtained from a positioning system by the second mobile terminal, to determine high-precision positioning information of the mobile terminal. Therefore, a requirement of massive mobile users for high-precision positioning is met, base stations that are directly connected to the CORS system are reduced, and working pressure of the CORS system is reduced.

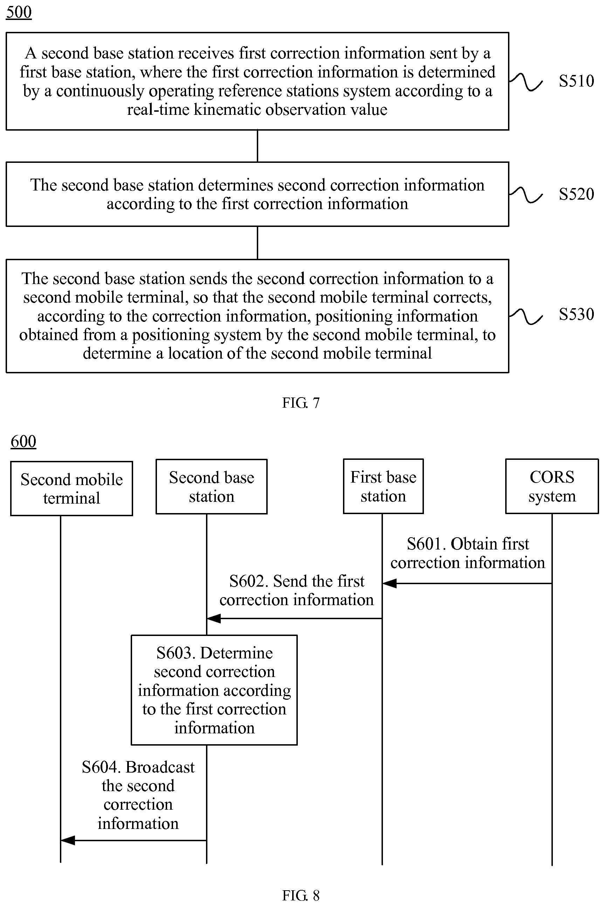

With reference to FIG. 2 to FIG. 6, the positioning method in a mobile network according to the embodiments of the present invention is described in detail above from a perspective of the first base station. With reference to FIG. 7, the positioning method in a mobile network according to the embodiments of the present invention is described in detail below from a perspective of a second base station.

FIG. 7 is a schematic flowchart of a positioning method 500 in a mobile network according to an embodiment of the present invention. As shown in FIG. 7, the positioning method 500 includes the following steps.

S510. A second base station receives first correction information sent by a first base station, where the first correction information is determined by a continuously operating reference stations system according to a real-time kinematic observation value.

S520. The second base station determines second correction information according to the first correction information.

S530. The second base station sends the second correction information to the second mobile terminal, so that the second mobile terminal corrects, according to the correction information, positioning information obtained from a positioning system by the second mobile terminal, to determine a location of the second mobile terminal.

Optionally, that a second base station receives first correction information sent by a first base station includes:
receiving, by the second base station, the first correction information that is sent by the first base station by using N forwarding base stations, where N is determined according to a time to live value of the first correction information, and the forwarding base stations are not connected to the CORS system.

A specific process of obtaining the correction information from the first base station by the second base station in this embodiment of the present invention is similar to the specific process, in the foregoing method, for sending the correction information by the first base station to the second base station. For brevity, details are not described herein.

Optionally, if a distance between the second base station and the first base station falls within the preset range, the second correction information is the first correction information, and the first correction information includes a signal reference station differential correction or a virtual reference station VRS differential correction.

Specifically, when receiving the first correction information sent by the first base station, the second base station may first determine, according to location information carried in the first correction information, whether the distance between the second base station and the first base station falls within the preset range, or whether the second base station is in a preset range of the first base station. Specific content of the preset range in this embodiment of the present invention has been described in detail in the foregoing method. For brevity, details are not described herein.

When it is determined that the second base station is in the preset range of the first base station, the first correction information may be directly used as the second correction information. The first correction information may be a signal reference station differential correction, a VRS differential correction, or a MAC unit differential correction. This is not particularly limited in the present invention.

Optionally, if a distance between the second base station and the first base station falls within the preset range, the second correction information is the first correction information, and the first correction information includes a MAC unit differential correction. That a second base station receives first correction information sent by a first base station includes:
receiving, by the second base station, a MAC unit differential correction sent by a target first base station in a target MAC unit, where the second base station and the target first base station belong to the target MAC unit.

That the second base station sends the second correction information to the second mobile terminal, so that the second mobile terminal determines a location of the second mobile terminal according to the correction information includes:
sending, by the second base station, the MAC unit differential correction to the second mobile terminal, so that the second mobile terminal determines the location of the second mobile terminal according to the MAC unit differential correction.

Specifically, the second base station may directly receive the MAC differential correction sent by the first base station, or may receive, by means of forwarding of N forwarding base stations, the MAC differential correction sent by the first base station. The second base station may determine, according to a location of the second base station and a unit attribute carried in each MAC unit differential correction, a MAC unit (referred to as a "target MAC unit" for short) to which the second base station belongs, receive, according to the target MAC unit, a MAC unit differential correction sent by a first base station (referred to as a "target first base station" for short) in the target MAC unit, use the MAC unit differential correction as correction information (that is, the second correction information) for the second base station and the second mobile terminal, and discard a MAC unit differential correction sent by another first base station.

It should be noted that there may be one or more target first base stations. When receiving one MAC unit differential correction sent by the target first base station, the second base station may directly send the MAC unit differential correction to the second mobile terminal. When receiving multiple MAC unit differential corrections sent by the target first base station, the second base station may resolve the multiple MAC unit differential corrections again, to determine a MAC unit differential correction used for positioning the second mobile terminal.

Optionally, if a distance between the second base station and the first base station is beyond the preset range, the second correction information includes a virtual reference station VRS differential correction.

That a second base station receives first correction information sent by a first base station includes:
receiving, by the second base station, at least three pieces of first correction information sent by at least three first base stations, where each of the at least three first base stations is in one-to-one correspondence with each of the at least three pieces of first correction information.

That the second base station determines second correction information according to the first correction information includes:
determining, by the second base station, the VRS differential correction according to the at least three pieces of first correction information.

That the second base station sends the second correction information to the second mobile terminal, so that the second mobile terminal determines a location of the second mobile terminal according to the correction information includes:
sending, by the second base station, the VRS differential correction to the second mobile terminal, so that the second mobile terminal determines the location of the second mobile terminal according to the VRS differential correction.

Specifically, when the second base station determines, after receiving the first correction information sent by the first base station, that the distance between the second base station and the first base station is beyond the preset range, the second base station may receive the first correction information sent by the at least three first base stations, and perform secondary resolving on the received at least three pieces of first correction information, to determine the VRS differential correction used for positioning the second mobile terminal.

It should be noted that the foregoing first correction information required for secondary resolving may be a VRS differential correction, or may be a signal reference station differential correction or a MAC unit differential correction. This is not particularly limited in the present invention. The second base station may perform secondary resolving according to the received first correction information, to obtain the second correction information.

Optionally, that the second base station sends the second correction information to the second mobile terminal includes:
sending, by the second base station, a cell broadcast message, where the cell broadcast message carries the second correction information, so that the second mobile terminal receives the second correction information.

Optionally, the cell broadcast message includes a second system information block SIB message.

It should be understood that the cell broadcast message, the SIB message, and the RRC message are merely described as examples, and shall not constitute any limitation on the present invention. The present invention is not limited thereto. The first base station may send the first correction information to the first mobile terminal in a form of another message. This is not particularly limited in the present invention.

For ease of understanding, with reference to FIG. 8, a positioning method 500 in a mobile network in an embodiment of the present invention is described in detail below by using an example in which a second base station obtains first correction information from a first base station, to determine second correction information.

As shown in FIG. 8, the positioning method 600 includes the following steps.

S601. A first base station obtains first correction information from CORS positioning. A specific procedure of S601 is described in detail in the foregoing method, and may be corresponding to S301 to S304 in the positioning method 300. For brevity, details are not described herein.

S602. The first base station sends the first correction information to a second base station.

S603. The second base station determines second correction information according to the first correction information. A specific process of determining the second correction information by the second base station is described in detail in the foregoing positioning method 500. For brevity, details are not described herein.

S604. The second base station broadcasts the second correction information, so that a mobile terminal in a serving range of the second base station receives the second correction information.

It should be noted that the first base station may continuously listen to the first correction information sent by the CORS system, and may send the first correction information to the second base station in specific frequency (for example, once per second). The second base station may broadcast, in specific frequency, the second correction information determined according to the first correction information, to ensure real-time update of the second correction information received by the second mobile terminal.

Optionally, the positioning method 500 further includes:
receiving, by the second base station, a first positioning certificate sent by the server, where the first positioning certificate is corresponding to a second positioning certificate sent by the server to the second mobile terminal, so that the second mobile terminal obtains the correction information from the second base station according to the second positioning certificate.

Optionally, the receiving, by the second base station, a first positioning certificate sent by the server includes:
receiving, by the first base station, a first Long Term Evolution Positioning Protocol A LPPa message sent by the server, where the first LPPa message carries the first positioning certificate.

An action of obtaining the correction information from the second base station by the second mobile terminal according to the second positioning certificate is similar to the action of obtaining the correction information from the first base station by the first mobile terminal according to the second positioning certificate in the positioning method 400. For brevity, details are not described herein.

According to the positioning method in this embodiment of the present invention, a first base station is connected to a CORS system, to obtain first correction information; and the first correction information is sent to a second base station, so that the second base station determines second correction information according to the first correction information, and the second mobile terminal corrects, according to the second correction information, positioning information obtained from a positioning system by the second mobile terminal, to determine high-precision positioning information of the mobile terminal. Therefore, a requirement of massive mobile users for high-precision positioning is met, base stations that are directly connected to the CORS system are reduced, and working pressure of the CORS system is reduced.

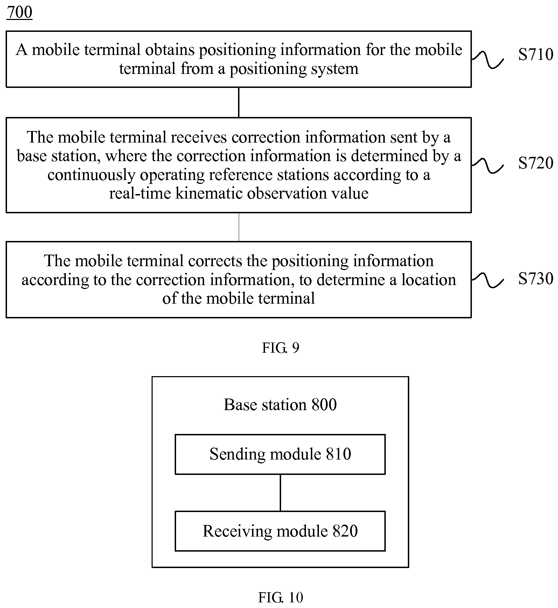

With reference to FIG. 2 to FIG. 8, the positioning method in a mobile network according to the embodiments of the present invention is separately described in detail above from perspectives of a first base station and a second base station. With reference to FIG. 9, the positioning method in a mobile network according to the embodiments of the present invention is described in detail below from a perspective of a mobile terminal.

FIG. 9 shows a positioning method 700 in a mobile network according to an embodiment of the present invention. As shown in FIG. 9, the positioning method 700 includes the following steps.

S710. A mobile terminal obtains positioning information for the mobile terminal from a positioning system.

S720. The mobile terminal receives correction information sent by a base station, where the correction information is determined by a continuously operating reference stations system according to a real-time kinematic observation value.

S730. The mobile terminal corrects the positioning information according to the correction information, to determine a location of the mobile terminal.

In the method 700, actions of the mobile terminal are similar to the actions of the mobile terminals (including the first mobile terminal and the second mobile terminal) in the methods in FIG. 2 to FIG. 8. To avoid repetition herein, detailed descriptions thereof are omitted.

According to the positioning method in a mobile network in this embodiment of the present invention, a mobile terminal receives correction information from a base station, and corrects positioning information obtained from a positioning system by the mobile terminal, to determine high-precision positioning information of the mobile terminal. Therefore, a requirement of massive mobile users for high-precision positioning is met.

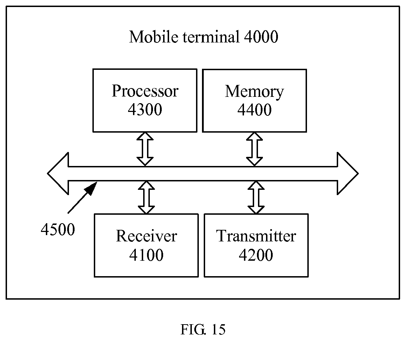

With reference to FIG. 2 to FIG. 9, the positioning method in a mobile network according to the embodiments of the present invention is described in detail above. With reference to FIG. 10 and FIG. 15, a base station and a terminal device according to the embodiments of the present invention are described in detail below.

FIG. 10 is a schematic block diagram of a base station 800 according to an embodiment of the present invention. As shown in FIG. 10, the base station 800 includes:
a sending module 810, configured to send first location information to a continuously operating reference stations CORS system, where the first location information is used to indicate a location of the base station 800; and
a receiving module 820, configured to receive first correction information sent by the CORS system, where the first correction information is determined by the CORS system according to the first location information.

The sending module 810 is further configured to send the first correction information to a first mobile terminal, so that the first mobile terminal corrects, according to the first correction information, positioning information obtained from a positioning system by the first mobile terminal, to determine a location of the first mobile terminal.

Optionally, the sending module 810 is specifically configured to send a cell broadcast message, where the cell broadcast message carries the first correction information, so that the first mobile terminal corrects, according to the first correction information, the positioning information obtained from the positioning system by the first mobile terminal, to determine the location of the first mobile terminal.

Optionally, the first correction information includes a signal reference station differential correction, a Master-Auxiliary Concept MAC unit differential correction, or a virtual reference station VRS differential correction.

Optionally, the sending module 810 is further configured to send the first correction information to a second base station, so that the second base station determines second correction information according to the first correction information, and a second mobile terminal corrects, according to the second correction information sent by the second base station, positioning information obtained from the positioning system by the second mobile terminal, to determine a location of the second mobile terminal. The second base station is not connected to the CORS system.

Optionally, the sending module 810 is specifically configured to send the first correction information to the second base station by using N forwarding base stations. N is determined according to a time to live value of the first correction information, and the forwarding base stations are not connected to the CORS system.

The base station 800 according to this embodiment of the present invention may be corresponding to the first base station in the positioning method in a mobile network according to the embodiments of the present invention. In addition, the modules in the base station 800 and the foregoing other operations and/or functions are separately intended to implement corresponding procedures of the positioning methods in FIG. 2 to FIG. 9. For brevity, details are not described herein.

The base station in this embodiment of the present invention obtains first correction information from a CORS system, and sends the first correction information to a first mobile terminal, so that the first mobile terminal corrects, according to the correction information, positioning information obtained from a positioning system by the second mobile terminal, to determine high-precision positioning information of the first mobile terminal. In addition, the base station sends the first correction information to a second base station, so that the second base station determines second correction information according to the first correction information, and the second mobile terminal determines high-precision positioning information of the second mobile terminal according to the second correction information. Therefore, a requirement of massive mobile users for high-precision positioning is met, base stations that are directly connected to the CORS system are reduced, and working pressure of the CORS system is reduced.

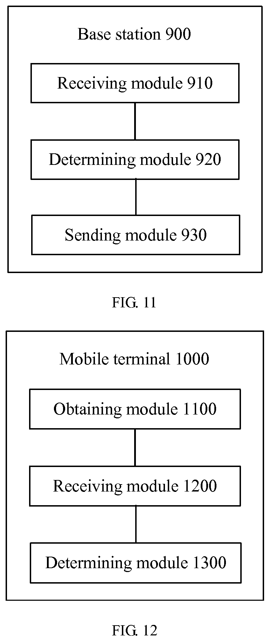

FIG. 11 is a schematic block diagram of another base station 900 according to an embodiment of the present invention. As shown in FIG. 11, the base station 900 includes:
a receiving module 910, configured to receive first correction information sent by a first base station, where the first correction information is determined by a continuously operating reference stations system according to a kinematic observation value;
a determining module 920, configured to determine second correction information according to the first correction information; and
a sending module 930, configured to send the second correction information to a second mobile terminal, so that the second mobile terminal corrects, according to the second correction information, positioning information obtained from a positioning system by the second mobile terminal, to determine a location of the second mobile terminal.

Optionally, the receiving module 910 is specifically configured to receive the first correction information that is sent by the first base station by using N forwarding base stations. N is determined according to a time to live value of the first correction information, and the forwarding base stations are not connected to the CORS system.

Optionally, if a distance between the base station 900 and the first base station falls within the preset range, the second correction information is the first correction information, and the first correction information includes a signal reference station differential correction or a virtual reference station VRS differential correction.

Optionally, if a distance between the base station 900 and the first base station falls within the preset range, the second correction information is the first correction information, and the first correction information includes a MAC unit differential correction.

The receiving module 910 is specifically configured to receive a MAC unit differential correction sent by a target first base station in a target MAC unit, and the base station and the target first base station belong to the target MAC unit.

The sending module 930 is specifically configured to send the MAC unit differential correction to the second mobile terminal, so that the second mobile terminal determines the location of the second mobile terminal according to the MAC unit differential correction.

Optionally, if a distance between the base station 900 and the first base station is beyond the preset range, the second correction information includes a virtual reference station VRS differential correction.

The receiving module 910 is further configured to receive at least three pieces of first correction information sent by at least three first base stations, and each of the at least three first base stations is in one-to-one correspondence with each of the at least three pieces of first correction information.

The determining module 920 is specifically configured to determine the VRS differential correction according to the at least three pieces of first correction information.

The sending module 930 is specifically configured to send the VRS differential correction to the second mobile terminal, so that the second mobile terminal determines the location of the second mobile terminal according to the VRS differential correction.

Optionally, the sending module 930 is specifically configured to send a cell broadcast message, and the cell broadcast message carries the second correction information, so that the second mobile terminal corrects, according to the second correction information, the positioning information obtained from the positioning system by the second mobile terminal, to determine the location of the second mobile terminal.

Optionally, the cell broadcast message includes a second SIB message.

The base station 900 according to this embodiment of the present invention may be corresponding to the second base station in the positioning method in a mobile network according to the embodiments of the present invention. In addition, the modules in the base station 900 and the foregoing other operations and/or functions are separately intended to implement corresponding procedures of the positioning methods in FIG. 2 to FIG. 9. For brevity, details are not described herein.

According to the base station in this embodiment of the present invention, a first base station is connected to a CORS system, to obtain first correction information; and the first correction information is sent to the base station, so that the base station determines second correction information according to the first correction information, and the second mobile terminal corrects, according to the second correction information, positioning information obtained from a positioning system by the second mobile terminal, to determine high-precision positioning information of the mobile terminal. Therefore, a requirement of massive mobile users for high-precision positioning is met, base stations that are directly connected to the CORS system are reduced, and working pressure of the CORS system is reduced.

FIG. 12 is a schematic block diagram of a mobile terminal 1000 according to an embodiment of the present invention. As shown in FIG. 12, the mobile terminal 1000 includes:
an obtaining module 1100, configured to obtain positioning information for the mobile terminal from a positioning system;
a receiving module 1200, configured to receive correction information sent by a base station, where the correction information is determined by a continuously operating reference stations system according to a real-time kinematic observation value; and
a determining module 1300, configured to correct, according to the correction information received by the receiving module 1200, the positioning information obtained by the obtaining module 1100, to determine a location of the mobile terminal.

The mobile terminal 1000 according to this embodiment of the present invention may be corresponding to the mobile terminal in the positioning method in a mobile network according to the embodiments of the present invention. In addition, the modules in the mobile terminal 1000 and the foregoing other operations and/or functions are separately intended to implement corresponding procedures of the positioning methods in FIG. 2 to FIG. 9. For brevity, details are not described herein.

The mobile terminal in this embodiment of the present invention receives correction information from a base station, and corrects positioning information obtained from a positioning system, to determine high-precision positioning information of the mobile terminal. Therefore, a requirement of massive mobile users for high-precision positioning is met.

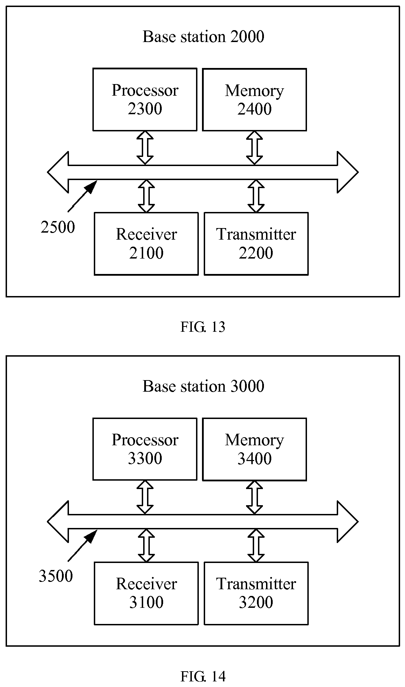

FIG. 13 is a schematic block diagram of a base station 2000 according to another embodiment of the present invention. As shown in FIG. 13, the base station 2000 includes: a receiver 2100, a transmitter 2200, a processor 2300, a memory 2400, and a bus system 2500. The receiver 2100, the transmitter 2200, the processor 2300, and the memory 2400 are connected to each other by using the bus system 2500. The memory 2400 is configured to store an instruction. The processor 2300 is configured to execute the instruction stored in the memory 2400, so as to control the receiver 2400 to receive a signal and control the transmitter 2200 to send a signal.

The transmitter 2200 is configured to send first location information to a continuously operating reference stations CORS system, and the first location information is used to indicate a location of the base station 2000.

The receiver 2100 is configured to receive first correction information sent by the CORS system, and the first correction information is determined by the CORS system according to the first location information.

The transmitter 2200 is further configured to send the first correction information to a first mobile terminal, so that the first mobile terminal corrects, according to the first correction information, positioning information obtained from a positioning system by the first mobile terminal, to determine a location of the first mobile terminal.

Optionally, the transmitter 2200 is specifically configured to send a cell broadcast message, and the cell broadcast message carries the first correction information, so that the first mobile terminal corrects, according to the first correction information, the positioning information obtained from the positioning system by the first mobile terminal, to determine the location of the first mobile terminal.

Optionally, the first correction information includes a signal reference station differential correction, a Master-Auxiliary Concept MAC unit differential correction, or a virtual reference station VRS differential correction.

Optionally, the transmitter 2200 is further configured to send the first correction information to a second base station, so that the second base station determines second correction information according to the first correction information, and a second mobile terminal corrects, according to the second correction information sent by the second base station, positioning information obtained from the positioning system by the second mobile terminal, to determine a location of the second mobile terminal. The second base station is not connected to the CORS system.

Optionally, the transmitter 2200 is specifically configured to send the first correction information to the second base station by using N forwarding base stations. N is determined according to a time to live value of the first correction information, and the forwarding base stations are not connected to the CORS system.

It should be understood that, in this embodiment of the present invention, the processor 2300 may be a central processing unit (Central Processing Unit, "CPU" for short), or the processor 2300 may be another general purpose processor, a digital signal processor (DSP), an application-specific integrated circuit (ASIC), a field programmable gate array (FPGA) or another programmable logic device, a discrete gate or a transistor logic device, a discrete hardware assembly, or the like. The general purpose processor may be a microprocessor, or the processor may be any conventional processor or the like.

The memory 2400 may include a read-only memory and a random access memory, and provides an instruction and data for the processor 2300. A part of the memory 2400 may further include a nonvolatile random access memory. For example, the memory 2400 may further store information about a device type.

In addition to a data bus, the bus system 2500 may include a power bus, a control bus, a status signal bus, and the like. However, for clarity of description, various buses are marked as the bus system 2500 in the figure.

In an implementation process, the steps in the foregoing methods may be completed by using an integrated logic circuit of hardware in the processor 2300 or an instruction in a form of software. Steps of the positioning methods disclosed with reference to the embodiments of the present invention may be directly performed and completed by a hardware processor, or may be performed and completed by using a combination of hardware and software modules in the processor. The software module may be located in a mature storage medium in the field, such as a random access memory, a flash memory, a read-only memory, a programmable read-only memory, an electrically-erasable programmable memory, or a register. The storage medium is located in the memory 2400. The processor 2300 reads information in the memory 2400, and completes the steps of the foregoing methods in combination with hardware of the processor 2300. To avoid repetition, details are not described herein.

The base station 2000 according to this embodiment of the present invention may be corresponding to the first base station in the positioning method in a mobile network according to the embodiments of the present invention. In addition, the modules in the base station 2000 and the foregoing other operations and/or functions are separately intended to implement corresponding procedures of the positioning methods in FIG. 2 to FIG. 9. For brevity, details are not described herein.

The base station in this embodiment of the present invention obtains first correction information from a CORS system, and sends the first correction information to a first mobile terminal, so that the first mobile terminal corrects, according to the correction information, positioning information obtained from a positioning system by the first mobile terminal, to determine high-precision positioning information of the first mobile terminal. In addition, the base station sends the first correction information to a second base station, so that the second base station determines second correction information according to the first correction information, and the second mobile terminal determines high-precision positioning information of the second mobile terminal according to the second correction information. Therefore, a requirement of massive mobile users for high-precision positioning is met, base stations that are directly connected to the CORS system are reduced, and working pressure of the CORS system is reduced.

FIG. 14 is a schematic block diagram of another base station 3000 according to another embodiment of the present invention. As shown in FIG. 14, the base station 3000 includes: a receiver 3100, a transmitter 3200, a processor 3300, a memory 3400, and a bus system 3500. The receiver 3100, the transmitter 3200, the processor 3300, and the memory 3400 are connected to each other by using the bus system 3500. The memory 3400 is configured to store an instruction. The processor 3300 is configured to execute the instruction stored in the memory 3400, so as to control the receiver 3400 to receive a signal and control the transmitter 3200 to send a signal.

The receiver 3100 is configured to receive first correction information sent by the first base station, and the first correction information is determined by a continuously operating reference stations system according to a kinematic observation value.

The processor 3300 is configured to determine second correction information according to the first correction information.

The transmitter 3200 is configured to send the second correction information to the second mobile terminal, so that the second mobile terminal corrects, according to the second correction information, positioning information obtained from a positioning system by the second mobile terminal, to determine a location of the second mobile terminal.

Optionally, the receiver 3100 is specifically configured to receive the first correction information that is sent by the first base station by using N forwarding base stations. N is determined according to a time to live value of the first correction information, and the forwarding base stations are not connected to the CORS system.

Optionally, if a distance between the base station 3000 and the first base station falls within the preset range, the second correction information is the first correction information, and the first correction information includes a signal reference station differential correction or a virtual reference station VRS differential correction.

Optionally, if a distance between the base station 3000 and the first base station falls within the preset range, the second correction information is the first correction information, and the first correction information includes a MAC unit differential correction.

The receiver 3100 is further configured to receive a MAC unit differential correction sent by a target first base station in a target MAC unit, and the base station 3000 and the target first base station belong to the target MAC unit.

The transmitter 3200 is specifically configured to send the MAC unit differential correction to the second mobile terminal, so that the second mobile terminal determines a current location according to the MAC unit differential correction.

Optionally, if a distance between the base station 3000 and the first base station is beyond the preset range, the second correction information includes a virtual reference station VRS differential correction.

The receiver 3100 is further configured to receive at least three pieces of first correction information sent by at least three first base stations, and each of the at least three first base stations is in one-to-one correspondence with each of the at least three pieces of first correction information.

When the processor 3300 is configured to determine the second correction information according to the first correction information, the processor 3300 is specifically configured to determine the VRS differential correction according to the at least three pieces of first correction information.

The transmitter 3200 is specifically configured to send the VRS differential correction to the second mobile terminal, so that the second mobile terminal determines the location of the second mobile terminal according to the VRS differential correction.

Optionally, the transmitter 3200 is specifically configured to send a cell broadcast message, and the cell broadcast message carries the second correction information, so that the second mobile terminal corrects, according to the second correction information, the positioning information obtained from the positioning system by the second mobile terminal, to determine the location of the second mobile terminal.

The base station 3000 according to this embodiment of the present invention may be corresponding to the second base station in the positioning method in a mobile network according to the embodiments of the present invention. In addition, the modules in the base station 3000 and the foregoing other operations and/or functions are separately intended to implement corresponding procedures of the positioning methods in FIG. 2 to FIG. 9. For brevity, details are not described herein.

According to the base station in this embodiment of the present invention, a first base station is connected to a CORS system, to obtain first correction information; and the first correction information is sent to the base station, so that the base station determines second correction information according to the first correction information, and the second mobile terminal corrects, according to the second correction information, positioning information obtained from a positioning system by the second mobile terminal, to determine high-precision positioning information of the mobile terminal. Therefore, a requirement of massive mobile users for high-precision positioning is met, base stations that are directly connected to the CORS system are reduced, and working pressure of the CORS system is reduced.

FIG. 15 is a schematic block diagram of a mobile terminal 4000 according to another embodiment of the present invention. As shown in FIG. 15, the mobile terminal 4000 includes: a receiver 4100, a transmitter 4200, a processor 4300, a memory 4400, and a bus system 4500. The receiver 4100, the transmitter 4200, the processor 4300, and the memory 4400 are connected to each other by using the bus system 4500. The memory 4400 is configured to store an instruction. The processor 4300 is configured to execute the instruction stored in the memory 4400, so as to control the receiver 4400 to receive a signal and control the transmitter 4200 to send a signal.

The processor 4300 is configured to obtain positioning information for the mobile terminal 4000 from a positioning system.

The receiver 4100 is configured to receive correction information sent by a base station, and the correction information is determined by a continuously operating reference stations system according to a real-time kinematic observation value.

The processor 4300 is further configured to correct, according to the correction information received by the receiver 4100, the positioning information obtained by the processor 4300, to determine a location of the mobile terminal.

The mobile terminal 4000 according to this embodiment of the present invention may be corresponding to the mobile terminal in the positioning method in a mobile network according to the embodiments of the present invention. In addition, the modules in the mobile terminal 4000 and the foregoing other operations and/or functions are separately intended to implement corresponding procedures of the methods in FIG. 2 to FIG. 9. For brevity, details are not described herein.

The mobile terminal in this embodiment of the present invention receives correction information from a base station, and corrects positioning information obtained from a positioning system, to determine high-precision positioning information of the mobile terminal. Therefore, a requirement of massive mobile users for high-precision positioning is met.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not constitute any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A positioning method in a mobile network, wherein the positioning method comprises:
sending, by a first base station, first location information to a continuously operating reference stations CORS system, wherein the first location information is used to indicate a location of the first base station;
receiving, by the first base station, first correction information sent by the CORS system, wherein the first correction information is determined by the CORS system according to the first location information; and
sending, by the first base station, the first correction information to a first mobile terminal, so that the first mobile terminal corrects, according to the first correction information, positioning information obtained from a positioning system by the first mobile terminal, to determine a location of the first mobile terminal.

2. The positioning method according to claim 1, wherein the sending, by the first base station, the first correction information to a first mobile terminal, so that the first mobile terminal corrects, according to the first correction information, positioning information obtained from a positioning system by the first mobile terminal, to determine a location of the first mobile terminal comprises:
sending, by the first base station, a cell broadcast message, wherein the cell broadcast message carries the first correction information, so that the first mobile terminal corrects, according to the first correction information, the positioning information obtained from the positioning system by the first terminal, to determine the location of the first mobile terminal.

3. The positioning method according to claim 1 or 2, wherein the first correction information comprises a single reference station differential correction, a Master-Auxiliary Concept MAC unit differential correction, or a virtual reference station VRS differential correction.

4. The positioning method according to any one of claims 1 to 3, wherein the positioning method further comprises:
sending, by the first base station, the first correction information to a second base station, so that the second base station determines second correction information according to the first correction information, and a second mobile terminal corrects, according to the second correction information sent by the second base station, positioning information obtained from the positioning system by the second mobile terminal, to determine a location of the second mobile terminal, wherein the second base station is not connected to the CORS system.

5. The positioning method according to claim 4, wherein the sending, by the first base station, the first correction information to a second base station comprises:
sending, by the first base station, the first correction information to the second base station by using N forwarding base stations, wherein N is determined according to a time to live value of the first correction information, and the forwarding base stations are not connected to the CORS system.

6. A positioning method in a mobile network, wherein the positioning method comprises:
obtaining, by a mobile terminal, positioning information for the mobile terminal from a positioning system;
receiving, by the mobile terminal, correction information sent by a base station, wherein the correction information is determined by a continuously operating reference stations system according to a real-time kinematic observation value; and
correcting, by the mobile terminal, the positioning information according to the correction information, to determine a location of the mobile terminal.

7. A base station, wherein the base station comprises:
a sending module, configured to send first location information to a continuously operating reference stations CORS system, wherein the first location information is used to indicate a location of the base station; and
a receiving module, configured to receive first correction information sent by the CORS system, wherein the first correction information is determined by the CORS system according to the first location information, wherein
the sending module is further configured to send the first correction information to a first mobile terminal, so that the first mobile terminal corrects, according to the first correction information, positioning information obtained from a positioning system by the first mobile terminal, to determine a location of the first mobile terminal.

8. The base station according to claim 7, wherein the sending module is specifically configured to send a cell broadcast message, wherein the cell broadcast message carries the first correction information, so that the first mobile terminal corrects, according to the first correction information, the positioning information obtained from the positioning system by the first mobile terminal, to determine the location of the first mobile terminal.

9. The base station according to claim 7 or 8, wherein the first correction information comprises a single reference station differential correction, a Master-Auxiliary Concept MAC unit differential correction, or a virtual reference station VRS differential correction.

10. The base station according to any one of claims 7 to 9, wherein the sending module is further configured to send the first correction information to a second base station, so that the second base station determines second correction information according to the first correction information, and a second mobile terminal corrects, according to the second correction information sent by the second base station, positioning information obtained from the positioning system by the second mobile terminal, to determine a location of the second mobile terminal, wherein the second base station is not connected to the CORS system.

11. The base station according to claim 10, wherein the sending module is specifically configured to send the first correction information to the second base station by using N forwarding base stations, wherein N is determined according to a time to live value of the first correction information, and the forwarding base stations are not connected to the CORS system.

12. A mobile terminal, wherein the mobile terminal comprises:
an obtaining module, configured to obtain positioning information for the mobile terminal from a positioning system;
a receiving module, configured to receive correction information sent by a base station, wherein the correction information is determined by a continuously operating reference stations system according to a real-time kinematic observation value; and
a determining module, configured to correct, according to the correction information received by the receiving module, the positioning information obtained by the obtaining module, to determine a location of the mobile terminal.
